(19) **Europäisches Patentamt / European Patent Office / Office européen des brevets**

(11) **EP 2 151 952 B1**

(12) **EUROPEAN PATENT SPECIFICATION**

(45) Date of publication and mention
of the grant of the patent:
**19.10.2011 Bulletin 2011/42**

(51) Int Cl.:
*H04L 12/24* *(2006.01)* *H04L 12/28* *(2006.01)*

(21) Application number: **09167210.5**

(22) Date of filing: **04.08.2009**

(54) **A network management method**

Netzwerkverwaltungsverfahren

Procédé de gestion d'un réseau

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **06.08.2008 IE 20080649**

(43) Date of publication of application:
**10.02.2010 Bulletin 2010/06**

(73) Proprietors:
• **Murphy, Cyril**
**Dublin 2 (IE)**
• **Cullen, Barry**
**Dublin 2 (IE)**

(72) Inventors:
• **Murphy, Cyril**
**Dublin 2 (IE)**

• **Cullen, Barry**
**Dublin 2 (IE)**

(74) Representative: **Armstrong, Rosemary**
**Scotland House**
**165-169 Scotland Street**
**Glasgow**
**Strathclyde G5 8PL (GB)**

(56) References cited:
**WO-A2-01/58076** **US-B1- 6 424 929**
**US-B1- 6 735 553** **US-B1- 6 810 356**

• **SANG A ET AL: "A predictability analysis of network traffic" COMPUTER NETWORKS, ELSEVIER SCIENCE PUBLISHERS B.V., AMSTERDAM, NL, vol. 39, no. 4, 15 July 2002 (2002-07-15), pages 329-345, XP004359009 ISSN: 1389-1286**

**Description**

The present invention relates to a network management method, and in particular to a network traffic management method that can provide traffic trends of an acceptable confidence level.

Base stations are critical elements of a communication network. The total geographical area which a base station provides coverage for is known as a cell. Transmit-receiver modules, which are located on the base stations, support calls within the cell. Transmit-receiver modules may be added to increase the number of calls supported within a cell, or removed to reduce the number of calls supported within a cell.

A cell is capable of supporting a maximum number of calls. When the cell is supporting the maximum number of calls no further calls may be supported and the cell is said to be congested. The number of calls supported within a cell may fluctuate over time for one reason or another. The number of supported calls within a cell is known as the traffic level within the cell. By recording the number of calls supported within a cell over a period of time, it is possible to determine a trend for the supported calls or traffic levels within that cell, over that period of time. These trends could be used to predict future traffic levels within the cell.

However, not all trends which are determined will be suitable to predict future traffic levels. Certain cells are required to support high traffic levels only during certain, busy, periods, while for the remaining periods the cell is required to support fewer calls. For example, cells in or around coastal regions may be required to support high traffic levels during the summer months, but lower traffic levels during the winter months. As a result the traffic levels within these cells will undergo extreme fluctuations i.e. the traffic levels will fluctuate between very high traffic levels and very low traffic levels. The traffic levels within such cells may be too divergent to provide a trend that may be used to accurately predict future traffic levels within the cell.

To prevent congestion during the busy periods, additional transmit-receiver modules must be installed on the base stations of these cells. However, during quiet periods, for example during the winter, these additional transmit-receiver modules are not used and are no longer required by the base station as the traffic levels within the cell can be greatly reduced. Having large numbers of transmit-receiver modules in a cell during a quiet period reduces equipment utilisation efficiency.

To allow transmit-receiver modules to be re-deployed to a cell in anticipation of an approaching busy period, reliable knowledge of future traffic levels within the cells of the communication network is required.

US 6,810,356 describes methods and systems for evaluating and planning advertising campaigns on the internet. The method includes predicting the rate of traffic to an internet location and providing a predictability score which indicates how accurate the predicted traffic rate is.

According to a first aspect of the invention there is provided a method of identifying reliable communication cells for which a traffic trend having an acceptable confidence level can be generated, comprising the steps of:

> choosing a trend generation period;
> determining which cells of a plurality of cells are trendable based on the number of busy-hour traffic levels measured within the trend generation period; and
> identifying the reliable communication cells from the trendable cells, wherein identifying the reliable communication cells comprises:

>> for each trendable cell, obtaining a plurality of busy-hour traffic levels measured within the trend generation period, generating a graph of the plurality of busy-hour traffic levels against time of the trend generation period, determining a line of best fit for the graph of the plurality of busy-hour traffic levels against time, determining the standard deviation of the plurality of busy-hour traffic levels from the line of best fit, and determining the average of the plurality of busy-hour traffic levels; and
>> for all of the trendable cells, generating a confidence graph of the average of the plurality of busy-hour traffic levels against the standard deviation of the plurality of busy-hour traffic levels, determining a first confidence line on the confidence graph, which represents a highest confidence level, determining a second confidence line on the confidence graph, which represents a lowest acceptable confidence level, and identifying cells that fall between the first confidence line and the second confidence line as the reliable communication cells.

The trend generation period may be all of a period for which busy-hour traffic levels have been measured for a cell. The trend generation period may be part of a period for which busy-hour traffic levels have been measured for a cell.

The busy-hour traffic levels may be weekly busy-hour traffic levels. For each week, the weekly busy-hour traffic level is the traffic level in the busiest hour in the week. The busy-hour traffic levels may be daily busy-hour traffic levels. For each day, the daily busy-hour traffic level is the traffic level in the busiest hour in the day. The busy-hour traffic levels may be monthly busy-hour traffic levels. For each month, the monthly busy-hour traffic level is the traffic level in the busiest hour in the month. The busy-hour traffic levels may be yearly busy-hour traffic levels. For each year, the yearly busy-hour traffic level is the traffic level in the busiest hour in the year. The busiest hour is the hour in which a cell supports the highest traffic level, i.e. the most calls.

The step of determining if a cell is trendable may comprise comparing the plurality of busy-hour traffic levels of the cell measured within the trend generation period with a busy-hour traffic level threshold.

The busy-hour traffic level threshold may be a threshold number of busy-hour traffic levels. For example, the threshold number of busy-hour traffic levels may be between 2 to 52 busy-hour traffic levels. The threshold number of busy-hour traffic levels may be two busy-hour traffic levels. The threshold number of busy-hour traffic levels may be four busy-hour traffic levels. The step of determining if a cell is trendable may comprise comparing the number of busy-hour traffic levels in the plurality of busy-hour traffic levels of the cell measured within the trend generation period with the threshold number of busy-hour traffic levels, and if the number of busy-hour traffic levels of the cell is greater than the threshold number of busy-hour traffic levels then the cell is trendable, and if the number of busy-hour traffic levels of the cell is less than the threshold number of busy-hour traffic levels then the cell is not trendable.

Additionally or alternatively, the busy-hour traffic level threshold may be a threshold percentage of busy-hour traffic levels. For example, the threshold percentage of busy-hour traffic levels may be between 1% and 100%. The threshold percentage of busy-hour traffic levels may be between 1% and 50%. The threshold percentage of busy-hour traffic levels may be between 1% and 25%. The step of determining if a cell is trendable may comprise determining the number of busy-hour traffic levels in the plurality of busy-hour traffic levels measured within the trend generation period, determining the number of busy-hour traffic levels which have been measured for the cell, calculating what percentage the number of busy-hour traffic levels in the plurality of busy-hour traffic levels is of the number of busy-hour traffic levels which have been measured for the cell, comparing the calculated percentage with the threshold percentage of busy-hour traffic levels, and if the calculated percentage is greater than the threshold percentage then the cell is trendable, and if the calculated percentage is less than the threshold percentage then the cell is not trendable.

Having a busy-hour traffic level threshold will ensure that a cell with insufficient busy-hour traffic levels will not be considered as a trendable cell. For example, when the busy-hour traffic levels are weekly busy-hour traffic levels, then a new cell, activated for less than two weeks, will have busy-hour traffic levels measured for a single week only. Therefore, only a single weekly busy-hour traffic level is available for that cell. As a graph of weekly busy-hour traffic levels against time cannot be generated using a single traffic level, the cell is determined not to be trendable. However, if the new cell was activated two or more weeks previous, then two or more weekly busy-hour traffic levels are measured for the cell. With two weekly busy-hour traffic levels, a graph of weekly busy-hour traffic levels against time may be generated, and therefore the cell is determined to be trendable.

The step of determining the first confidence line on the confidence graph, which represents the highest confidence level, may comprise the steps of

dividing the confidence graph into a plurality of bins, wherein the plurality of bins are arranged to provide two or more rows of bins;
counting the total number of cells contained within a first row of the two or more rows of bins;
counting the number of cells contained within each bin of the first row;
determining the number of cells contained within each bin of the first row as a percentage of the total number of cells contained within the first row;
identifying the bin that has a percentage of cells at least equal to a predetermined minimum percentage and which has the least standard deviation in the first row;
repeating the above steps for at least a second row of the two or more rows of bins;
determining the line of best fit for the identified bins.

The line of best fit for the identified bins corresponds to the first confidence line.

The minimum percentage value will result in cells which are severely congested being discounted, provided that very large amount of cells in the network are not severely congested. It is likely that most of the cells within the network will not be congested. Therefore, after the confidence graph has been divided into a plurality of bins, the bins within which the congested cells fall will have a low number of cells. The low number of cells will ensure that the number of cells within these bins as a percentage of the total number of cells contained within the row comprising these bins will be below the predetermined minimum percentage. As a result these bins (and the congested cells contained therein) will not be identified and will not be used in the determination of the first confidence line.

The step of determining the second confidence line on the confidence graph, which represents the lowest acceptable confidence level, may comprise the steps of

choosing a standard deviation shift;
forming the second confidence line as a line parallel to the first confidence line and shifted therefrom by the chosen standard deviation shift.

The step of determining the second confidence line on the confidence graph, which represents the lowest acceptable confidence level, may comprise the steps of

determining an equation which defines the first confidence line;
choosing a standard deviation shift;
adding the chosen standard deviation shift to the equation of the first confidence line to obtain a second equation, and
determining that the second equation defines the second confidence line.

The step of identifying cells that fall between the first confidence line and the second confidence line as reliable communication cells may comprise plotting the first and second confidence lines on the confidence graph to define a region that encloses reliable communication cells.

Once the first and second confidence lines are plotted on the confidence graph, they will be positioned parallel to one another. The second confidence line will be shifted the chosen standard of deviation shift from the first confidence line. As the first confidence line represents the highest confidence level and the second confidence line represents the lowest confidence level, the region between both lines will define a region of acceptable confidence level. The cells that lie within this region are considered reliable communication cells as they lie within an acceptable confidence level.

The method of identifying reliable communication cells may further comprise the step of flagging cells in which an event has occurred. An event may be any occurrence which causes an abnormal peak or trough in the busy-hour traffic levels within a cell. Flagging a cell may include notifying an operator of the network of the existence of the cell. The flagging of such a cell will warn the operator that the traffic levels within the cell may have been influenced by an event (e.g. a sporting event taking place within the cell). The operator may then decide whether or not to include the cell in the remaining steps of the method.

According to a second aspect of the present invention there is provided a method of generating a traffic trend of an acceptable confidence level for a communication cell comprising the steps of

determining if the cell is a reliable communication cell using the method according to the first aspect of the invention, and if this is the case,
determining that the line of best fit of a graph of a plurality of busy-hour traffic levels measured within a trend generation period against time in the trend generation period for the cell provides the traffic trend of the acceptable confidence level of the cell.

The method of generating a traffic trend of an acceptable confidence level for a communication cell may further comprise the steps of

choosing a prediction period over which the traffic trend of the cell is to extend, and
extrapolating the line of best fit of the graph of the plurality of busy-hour traffic levels against time of the cell to a point which represents the end of the prediction period.

The prediction period may include a period for which busy-hour traffic levels of a cell are not available. The period for which busy-hour traffic levels of a cell are not available may be a period of time in the future.

The method of generating a traffic trend of an acceptable confidence level may further comprise the step of adding one or more margins to the extrapolated line of best fit. The margins may be added to the extrapolated line of best fit at the point which represents the end of the prediction period. A margin may be added to account for variation in future busy-hour traffic levels. A margin may be added to account for overheads in the future. A margin may be added to account for percentage growth over a first time period.

Determining a the percentage growth over a first time period may comprise the steps of,

reading a start value of the line of best fit;
reading a final value of the line of best fit;
determining the difference between the start value and the final value;
reading the time period between the start value and the final value, to provide a second time period which is a sub-division of the first time period;
calculating the equivalent difference between the start value and the final value over the first time period.

Determining a margin to account for percentage growth over a first time period may comprise the steps of,

choosing a first margin value and a second margin value;
choosing a threshold percentage growth;
comparing the percentage growth over the first time period to the threshold percentage growth, wherein if the percentage growth over the first time period is above the threshold percentage growth, the first margin value is the margin to account for percentage growth over the first time period, and if the percentage growth over the first time period is below the threshold percentage growth, the second margin value is the margin to account for percentage growth over the first time period.

The first time period may be a period of a year, so that the percentage growth over the first time period is a yearly percentage growth. The second time period, which is a sub-division of the first time period, may be any number of weeks less than 52.

An embodiment of the invention will now be described by way of example only, with reference to the accompanying drawings, in which:

Figure 1 is a flow diagram that illustrates the steps involved in determining reliable communication cells for which a traffic trend having an acceptable confidence level can be generated;

Figure 2 is a flow diagram that illustrates the steps involved in determining a first confidence line of a confidence graph;

Figure 3 is a confidence graph with average busy-hour traffic levels of trendable cells in a network, plotted against the standard deviation of busy-hour traffic levels of each of the trendable cells, and first and second confidence lines of a confidence graph; and

Figure 4 is a flow diagram that illustrates the steps involved in generating a traffic trend which includes a trend for future traffic, the traffic trend having an acceptable confidence level.

In the following description the busy-hour traffic levels of the cells are weekly busy-hour traffic levels. However, it will be understood that any of daily, monthly, or yearly busy-hour traffic levels may be used in the methods described.

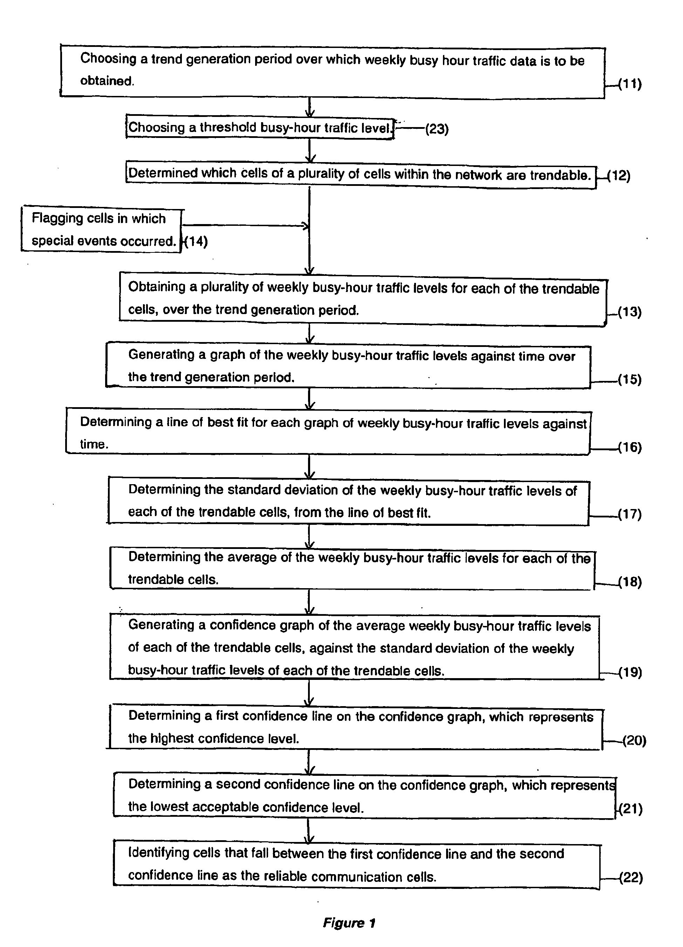

Referring to Figure 1, the steps involved in identifying reliable communication cells of a network for which a traffic trend having an acceptable confidence level can be generated, are shown.

Firstly, a trend generation period is chosen, then a plurality of weekly busy-hour traffic levels which have been measured within the trend generation period are obtained (11). In this particular embodiment, the chosen trend generation period must be a period of time in the past, it may not include any future period as weekly busy-hour traffic levels for a period of time which has not yet occurred cannot be measured. For example, the chosen period may be a five week period that extends from the present to five weeks into the past, or it may be a period of 14 days that extends from the present 14 days into the past.

A busy-hour traffic level threshold is then chosen (23). The busy-hour traffic level threshold is the minimum busy-hour traffic levels that a cell must have within the chosen trend generation period, in order to be considered in the remaining steps of the method i.e. to be considered as a trendable cell.

An operator of the network may choose the busy-hour traffic level threshold. In this embodiment, the busy-hour traffic level threshold is a threshold number of busy-hour traffic levels and is equal to at least two busy-hour traffic levels. This ensures that a line of best fit of a graph of busy-hour traffic levels against time can be drawn. The larger the threshold number of busy-hour traffic levels chosen by the operator, the higher the acceptable confidence level of the traffic trend. This is so as a low number of busy-hour traffic levels may provide little reflection of the typical traffic levels within a cell. For example, if a cell has two weeks of measured busy-hour traffic levels then it is difficult to say that traffic levels within that cell are typically, however, if a cell has one year of measured busy-hour traffic levels then sufficient data is provided to determine, with a reasonable degree confidence, the typical behaviour of the cell, based on the long history of busy-hour traffic levels available within the cell.

The chosen threshold number of busy-hour traffic levels is then used in determining which cells of a plurality of cells within the network are trendable (12). For each cell, the number of busy-hour traffic levels measured within the trend generation period is compared against the threshold number of busy-hour traffic levels. If the number of measured busy-hour traffic levels is greater than the threshold number of busy-hour traffic levels then the cell is trendable. If the number of measured busy-hour traffic levels is less than the threshold number of busy-hour traffic levels then the cell is not trendable.

In certain cases special events, such as sporting events, concerts or other social events, may have taken place within a cell. These special events may have caused an abnormal peak in the busy-hour traffic levels of that cell at some point during the chosen trend generation period. The abnormal peak will influence a traffic level trend determined for that cell, for example such a peak would influence a line of best fit for a graph of busy-hour traffic levels against time. These cells will be flagged and the operator can decide whether or not to discard these cells (14), i.e. whether or not to include these cells in the trendable cells. Flagging a cell includes any means of highlighting that cell to the operator.

Once the trendable cells within the network have been determined, for each cell the following steps are carried out. The weekly busy-hour traffic levels measured within the chosen trend generation period are obtained from a database of each of the trendable cells (13). Using the obtained weekly busy-hour traffic levels, a graph of the weekly busy-hour traffic levels against time in the chosen trend generation period is generated (15). A line of best fit for the graph of weekly busy-hour traffic levels against time is determined (16). To determine the line of best fit, a least mean square method is employed. The standard deviation of the weekly busy-hour traffic levels is determined from the line of best fit (17). The average of the weekly busy-hour traffic levels is determined (18).

For all of the trendable cells, a graph of the average of the weekly busy-hour traffic levels of the cells against the standard deviation of the weekly busy-hour traffic levels of the cells is plotted to provide a confidence graph (19). A first confidence line, which represents the highest confidence level, is then determined (20). Following this a second confidence line, which represents the lowest acceptable confidence level, is determined (21). The cells that fall between the first confidence line and the second confidence line are identified as reliable communication cells for which a traffic trend having an acceptable confidence level can be generated (22).

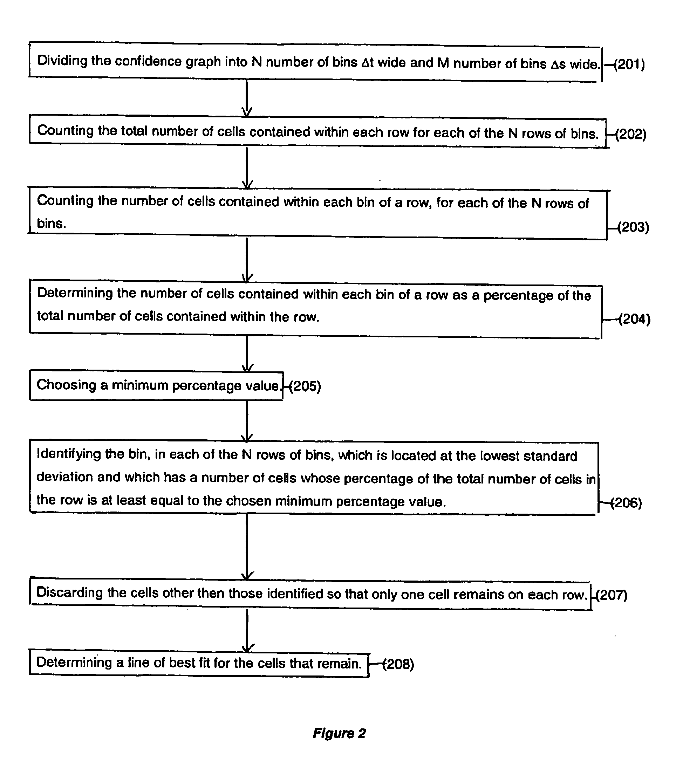

Figure 2 is a flow diagram that illustrates the steps involved in determining the first confidence line of the confidence graph. Firstly the confidence graph is divided into N rows of bins of dimension $\Delta t$ along the average traffic axis and M columns of bins of dimension $\Delta s$ along the standard deviation axis (201). For each of the N rows of bins, the total number of cells contained within each row is counted (202). For each of the N rows of bins, the number of cells contained within each bin of the row is then counted (203). Next, the number of cells contained within each bin of a row is determined as a percentage of the total number of cells contained within the row (204). A minimum percentage value is chosen (204) by the operator of the network. For each of the N rows of bins, the bin which is located at the lowest standard deviation and which has a number of cells whose percentage of the total number of cells in the row is at least equal to the chosen minimum percentage value, is identified (206). The cells other than those identified are discarded so that only one cell remains on each row (207). A line of best fit is determined for the cells that remain (208). A least mean square method may be used to determine the line of best fit. The resulting line of best fit forms the first confidence line. The first confidence line is defined by the equation:

$$E_1 = a_0 + a_1\delta_{min}$$

where $E_1$ is the average traffic, $\delta_{min}$, is the minimum standard deviation before congestion and the slope of the first confidence line, $a_0$ is the intercept of the first confidence line on the average traffic axis, and $a_1$ is the value of the standard deviation on the x-axis.

The second confidence line is determined to be a line parallel to the first confidence line, and shifted therefrom by a chosen number of standard deviations. To determine the second confidence line the operator must first choose a standard deviation shift. The chosen standard deviation shift is added to the first confidence line to form the second confidence line. The second confidence line will be defined by the equation:

$$E_2 = a_0 + a_1\delta_{min} + A_1\Delta\delta$$

where $\Delta\delta$ is the standard deviation shift chosen by the operator. The standard deviation shift will be chosen depending on the operator's requirements for accuracy which, in turn, depends on the type of analysis which is being made. $\delta_{min}$ is the minimum standard deviation before congestion and the slope of the second confidence line (which is equal to the slope of the second confidence line), $a_0$ is the intercept of the first confidence line (which is added to $A_1.\Delta\delta$ to provide the intercept of the first confidence line), $a_1$ is the value of the standard deviation on the x-axis, and E is the value of the average traffic.

The value of $\Delta\delta$ determines the position of the second confidence line and therefore determines the minimum acceptable confidence level. The portion of the equation $A_1.\Delta\delta$ represents the shift of the intercept of the second confidence line from the intercept of the first confidence line. Choosing a larger $\Delta\delta$ will move the second confidence line further from the first confidence line, to provide a lower minimum confidence level. This would mean that more cells will fall between the first and second confidence lines and therefore more cells being identified as reliable cells. On the other hand a smaller $\Delta\delta$ would bring the second confidence line closer to the first confidence line, thereby increasing the minimum confidence level. This would mean that fewer cells will fall between the first and second confidence lines and therefore less cells being identified as being reliable cells. A network operator may wish to increase the minimum confidence level if they wish to identify cells that can be used to provide trends of a higher confidence level. Usually the value chosen depends on the type of analysis the operator wishes to perform.

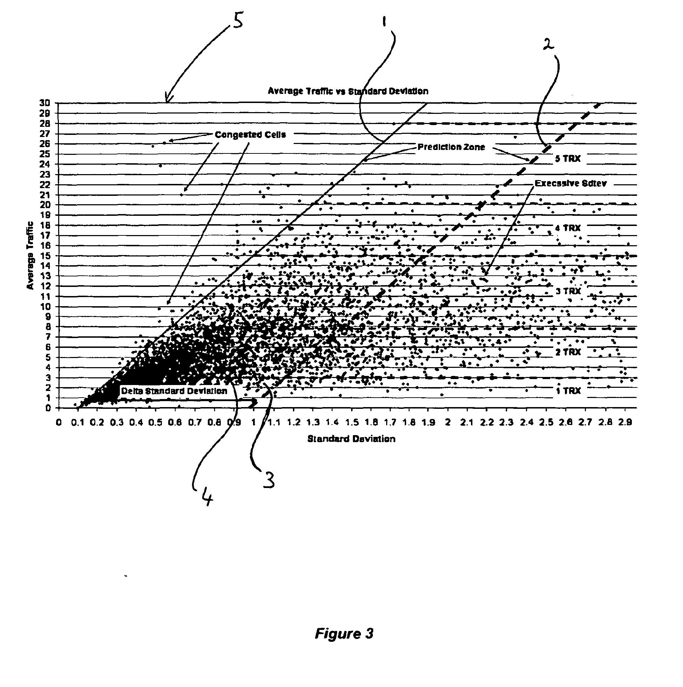

Figure 3 shows a confidence graph 5 in which the average of the weekly busy-hour traffic levels of each of the trendable cells in the network is plotted against the standard deviation of the weekly busy-hour traffic levels of each of the trendable cells. The trendable cells are represented as dots 3 on the confidence graph 5. A first confidence line 1 as well as a second confidence line 2 is also illustrated on the confidence graph 5. The first confidence line 1 represents the highest confidence level. The weekly busy-hour traffic levels taken from the cells 3 that are located closest to first confidence line 1 are considered to provide a traffic trend with the highest confidence level.

The first confidence line 1 divides the cells of the confidence graph 5 between those that are congested and those that are not congested. The cells 3 that lie to the right of confidence line 1 are not congested. The cells 3 that lie to the left of first confidence line 1 are congested and are therefore unable to support additional calls. As the cell 3 can no longer support any more calls, the standard deviation of the traffic levels within that cell 3 will decrease. The standard deviation will decrease to such a level that the traffic levels within these cells will be seen to remain almost constant. As the traffic levels of the congested cells will remain almost constant, the traffic trend for these cells will therefore also remain almost constant. As a result the traffic trends for these congested cells can be easily determined manually and no further consideration of these cells is required.

The second confidence line 2 represents the lowest acceptable confidence level. The weekly busy-hour traffic levels taken from the cells 3 that are located closest to the second confidence line 2 are considered to provide a traffic trend with the lowest confidence level. The traffic data of cells 3 that lie below second confidence line 2 will be too statistically divergent to provide a traffic trend with an acceptable confidence level. The second confidence line 2 divides the cells 3 on the confidence graph 5 between those whose traffic data is too statistically divergent to provide a traffic trend with an acceptable confidence level, and those whose traffic data is not too statistically divergent to provide a traffic trend with an acceptable confidence level.

The second confidence line 2 is arranged parallel to the first confidence line 1 and is shifted a number of standard deviations to the right. The number of standard deviations that the second confidence line 2 is shifted is chosen by the operator of the network.

The cells 3 that fall between the first confidence line 1 and the second confidence line 2 represent reliable communication cells 4 of the network. These reliable communication cells 4 can provide busy-hour traffic levels from which a traffic trend having an acceptable confidence level can be generated.

The graphs of the busy-hour traffic levels against time in the trend generation period, of each of the reliable cells, provide the traffic trends of an acceptable confidence level for the reliable cells.

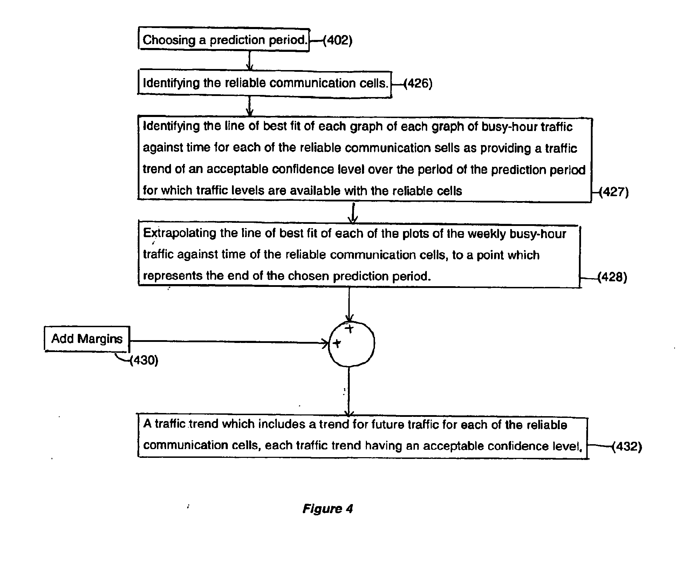

Figure 4 shows the steps involved in generating a traffic trend for a communication cell, the traffic trend having an acceptable confidence level. The traffic trend includes a trend for future traffic.

Firstly, a prediction period is chosen (402). In this embodiment the chosen prediction period is a period of time which extends from a point in time in the past through to a point in time in the future. For example, the prediction period may extend from 5 weeks in the past through to 5 weeks in the future, or 14 days in the past to 14 days in the future. The prediction period therefore encompasses the trend generation period and a future period.

The reliable cells are determined as before (426). For each reliable cell, the line of best fit of the graph of the weekly busy-hour traffic levels measured within the trend generation period against time in the trend generation period is determined as providing the traffic trend of the cell (427). For each cell, the line of best fit is extrapolated to a point which represents the end of the chosen prediction period (428). As the chosen prediction period is a period of time which extends from a point in time in the past through to a point in time in the future, the line of best fit will therefore be extended into the future thereby providing a prediction of future traffic trends for each reliable cell. The operator may choose how far into the future the trend extends by choosing the prediction period accordingly. For example, if the operator wishes to obtain a prediction further into the future then a larger prediction period, which extends further into the future, should be chosen.

Margins are then added to the extrapolated line of best fit, at the point which represents the end of the chosen prediction period (430). Margins are added to account for the variation in busy-hour traffic levels during the future, overheads in the future and yearly percentage growth.

The value of the margin which is added in order to account for variation in busy-hour traffic levels and the value of the margin which is added in order to account for overheads, are both chosen by the operator and added to the extrapolated line of best fit at the point which represents the end of the chosen prediction period. However, the value of the margin which is added to account for yearly percentage growth must be determined. To do this the yearly percentage growth must first be calculated.

To calculate the yearly percentage growth, the start value of the line of best fit for each graph of busy-hour traffic against time is read. The start value is the busy-hour traffic level of the extrapolated line, at the beginning of the chosen prediction period. The final value of the line of best fit for each graph of busy-hour traffic against time is also read. The final value is the busy-hour traffic level of the extrapolated line, at the end of the chosen prediction period. The difference between the start value and the final value is calculated. The number of weeks between the start value and the final value is read from the graph. The equivalent difference between the start value and final value over 52 weeks is calculated to provide the yearly percentage growth.

Once the yearly percentage growth has been calculated, the value of the margin which accounts for yearly percentage growth may be determined. To do this the operator chooses a first margin value, a second margin value and a threshold percentage growth. The first margin value is the margin value which is to be added to the extrapolated line at the point which represents the end of the chosen prediction period of a cell, which undergoes a yearly percentage growth that is greater than the threshold percentage growth. The second margin value is the margin value which is to be added to the extrapolated line at the point which represents the end of the chosen trend period of a cell, which undergoes a yearly percentage that is less then the threshold percentage growth. The yearly percentage growth is then compared to the threshold percentage growth. If the yearly percentage growth is found to be above the threshold percentage growth, the first margin value is the margin to account for yearly percentage growth, and if the yearly percentage growth is found to be below the threshold percentage growth, the second margin value is the margin to account for yearly percentage growth.

Once the line of best fit has been extrapolated to the end of the prediction period and the margins have been added, a traffic trend, which includes a trend for future traffic, results. The resulting traffic trend will have an acceptable confidence level. For the graphs of busy-hour traffic levels against time of each of the reliable cells, the line of best fit is extrapolated to the end of the prediction period and the margins are added, to provide a traffic trend which includes a trend for future traffic and is of an acceptable confidence level (432).

## Claims

1. A method of identifying reliable communication cells (4) for which a traffic trend having an acceptable confidence level can be generated, comprising the steps of:

   choosing a trend generation period;
   determining (12) which cells of a plurality of cells are trendable based on the number of busy-hour traffic levels measured within the trend generation period; and
   identifying the reliable communication cells (4) from the trendable cells (3), wherein identifying the reliable communication cells (4) comprises:

   for each trendable cell (3), obtaining (13) a plurality of busy-hour traffic levels measured within the trend generation period, generating (15) a graph of the plurality of busy-hour traffic levels against time of the trend generation period, determining (16) a line of best fit for the graph of the plurality of busy-hour traffic levels against time, determining (17) the standard deviation of the plurality of busy-hour traffic levels from the line of best fit, and determining (18) the average of the plurality of busy-hour traffic levels; and
   for all of the trendable cells (3), generating (19) a confidence graph (5) of the average of the plurality of busy-hour traffic levels against the standard deviation of the plurality of busy-hour traffic levels, determining (20) a first confidence line (1) on the confidence graph (5), which represents a highest confidence level, determining (21) a second confidence line (2) on the confidence graph, which represents a lowest acceptable confidence level selected by an operator, and identifying (22) cells that fall between the first confidence line (1) and the second confidence line (2) as the reliable communication cells (4).

2. The method according to claim 1, wherein the busy-hour traffic levels are one of weekly busy-hour traffic levels, daily busy-hour traffic levels, monthly busy-hour traffic levels, or yearly busy-hour traffic levels.

3. The method according to any preceding claim, wherein the step of determining (12) if a cell is trendable comprises,
comparing the number of busy-hour traffic levels of the cell measured within the trend generation period with a busy-hour traffic level threshold.

4. The method according to claim 3, wherein the busy-hour traffic level threshold is two or more busy-hour traffic levels.

5. The method according to claim 3 or claim 4, wherein the step of determining (12) if a cell is trendable comprises,
comparing the number of busy-hour traffic levels in the plurality of busy-hour traffic levels of the cell measured within the trend generation period with the busy-hour traffic level threshold, and if the number of busy-hour traffic levels of the cell is greater than or equal to the busy-hour traffic level threshold then the cell is trendable, and if the number of busy-hour traffic levels of the cell is less than the busy-hour traffic level threshold then the cell is not trendable.

6. The method according to any preceding claim, wherein the step of determining the first confidence line (1) on the confidence graph (5), which represents the highest confidence level comprises,
dividing (201) the confidence graph (5) into a plurality of bins,
wherein the plurality of bins are arranged to provide two or more rows of bins;
counting (202) the total number of cells contained within a first row of the two or more rows of bins;
counting (203) the number of cells contained within each bin of the first row;
determining (204) the number of cells contained within each bin of the first row as a percentage of the total number of cells contained within the first row;
identifying (206) the bin that has a percentage of cells at least equal to a predetermined minimum percentage and which has the least standard deviation in the first row;
repeating the above steps for at least a second row of the two or more rows of bins;
determining (208) the line of best fit for the identified bins.

7. The method according to any preceding claim, wherein the step of determining (21) the second confidence line (2) on the confidence graph (5), which represents the lowest acceptable confidence level comprises,
choosing a standard deviation shift;
forming the second confidence line (2) as a line parallel to the first confidence line (1) and shifted therefrom by the chosen standard deviation shift.

8. The method according to any one of claims 1 to 6, wherein the step of determining (21) the second confidence line (2) on the confidence graph (5), which represents the lowest acceptable confidence level comprises,
determining an equation which defines the first confidence line (1);
choosing a standard deviation shift;

adding the chosen standard deviation shift to the equation of the first confidence line (1) to obtain a second equation, and

determining that the second equation defines the second confidence line (2).

9. The method according to any preceding claim, wherein the step of identifying (22) cells that fall between the first confidence line (1) and the second confidence line (2) as reliable communication cells (4) comprises,

plotting the first and second confidence lines (1, 2) on the confidence graph (5) to define a region that encloses reliable communication cells (4).

10. The method according to any preceding claim, wherein the step of determining the trendable cells (3) comprises flagging (14) cells in which an abnormal peak or trough in the busy-hour traffic levels has occurred.

11. A method of generating a traffic trend of an acceptable confidence level for a communication cell comprising the steps of,

determining (426) if the cell is a reliable communication cell using the method according to claim 1, and if this is the case,

determining (432) that the line of best fit of a graph of a plurality of busy-hour traffic levels measured within a trend generation period against time in the trend generation period for the cell provides the traffic trend of the acceptable confidence level of the cell.

12. The method according to claim 11 wherein the method further comprises the steps of,

choosing (402) a prediction period over which the traffic trend of the cell is to extend, and

extrapolating (428) the line of best fit of the graph of the plurality of busy-hour traffic levels against time of the cell to a point which represents the end of the prediction period.

13. The method according to claim 11 or 12, wherein the method further comprises the step of adding (430) one or more margins to the extrapolated line of best fit to account for a percentage growth over a first time period.

14. The method according to claim 13, wherein the percentage growth over a first time period is determined by a method comprising the steps of,

reading a start value of the line of best fit;
reading a final value of the line of best fit;
determining the difference between the start value and the final value;

reading the time period between the start value and the final value, to provide a second time period which is a sub-division of the first time period;

calculating the equivalent difference between the start value and the final value over the first time period.

15. The method according to claim 13 or 14, wherein a margin to account for percentage growth over a first time period is determined by a method comprising the steps of,

choosing a first margin value and a second margin value;

choosing a threshold percentage growth;

comparing the percentage growth over the first time period to the threshold percentage growth, wherein if the percentage growth over the first time period is above the threshold percentage growth, the first margin value is the margin to account for percentage growth over the first time period, and if the percentage growth over the first time period is below the threshold percentage growth, the second margin value is the margin to account for percentage growth over the first time period.

**Patentansprüche**

1. Ein Verfahren zum Identifizieren zuverlässiger Kommunikationszellen (4), für die ein Verkehrstrend, der ein annehmbares Vertrauensniveau aufweist, erzeugt werden kann, wobei das Verfahren die folgenden Schritte beinhaltet:

Auswählen einer Trenderzeugungsperiode;
Bestimmen (12), welche Zellen einer Vielzahl von Zellen trendfähig sind, basierend auf der innerhalb der Trenderzeugungsperiode gemessenen Anzahl von Hauptverkehrsstunden-Verkehrsaufkommen; und

Identifizieren der zuverlässigen Kommunikationszellen (4) aus den trendfähigen Zellen (3), wobei das Identifizieren der zuverlässigen Kommunikationszellen (4) Folgendes beinhaltet:

für jede trendfähig Zelle (3) Erlangen (13) einer Vielzahl von innerhalb der Trenderzeugungsperiode gemessenen Hauptverkehrsstunden-Verkehrsaufkommen, Erzeugen (15) eines Graphen der Vielzahl von Hauptverkehrsstunden- Verkehrsaufkommen gegen die Zeit der Trenderzeugungsperiode, Bestimmen (16) einer Linie der besten Anpassung für den Graphen der Vielzahl von Hauptverkehrsstunden-Verkehrsaufkommen gegen die Zeit, Bestimmen (17) der Standardabweichung der Vielzahl von Hauptverkehrsstunden- Verkehrsaufkommen von der Linie der besten Anpassung und Bestimmen (18) des Durchschnitts der Vielzahl von Hauptverkehrsstunden-Verkehrsaufkommen; und

für alle trendfähigen Zellen (3) Erzeugen (19) eines Vertrauensgraphen (5) des Durchschnitts der Vielzahl von Hauptverkehrsstunden-Verkehrsaufkommen gegen die Standardabweichung der Vielzahl von Hauptverkehrsstunden- Verkehrsaufkommen, Bestimmen (20) einer ersten Vertrauenslinie (1) auf dem Vertrauensgraphen (5), die ein höchstes Vertrauensniveau repräsentiert,

Bestimmen (21) einer zweiten Vertrauenslinie (2) auf dem Vertrauensgraphen, die ein niedrigstes annehmbares Vertrauensniveau repräsentiert, das von einem Bediener gewählt wird, und Identifizieren (22) von Zellen, die zwischen die erste Vertrauenslinie (1) und die zweite Vertrauenslinie (2) fallen, als die zuverlässigen Kommunikationszellen (4).

2. Verfahren gemäß Anspruch 1, wobei die Hauptverkehrsstunden-Verkehrsaufkommen eines von wöchentlichen Hauptverkehrsstunden-Verkehrsaufkommen, täglichen Hauptverkehrsstunden-Verkehrsaufkommen, monatlichen Hauptverkehrsstunden-Verkehrsaufkommen oder jährlichen Hauptverkehrsstunden-Verkehrsaufkommen sind.

3. Verfahren gemäß einem der vorhergehenden Ansprüche, wobei der Schritt des Bestimmens (12), ob eine Zelle trendfähig ist, Folgendes beinhaltet:

Vergleichen der innerhalb der Trenderzeugungsperiode gemessenen Anzahl von Hauptverkehrsstunden-Verkehrsaufkommen der Zelle mit einem Hauptverkehrsstunden-Verkehrsaufkommen-Schwellenwert.

4. Verfahren gemäß Anspruch 3, wobei der Hauptverkehrsstunden-Verkehrsaufkommen- Schwellenwert zwei oder mehr Hauptverkehrsstunden-Verkehrsaufkommen ist.

5. Verfahren gemäß Anspruch 3 oder Anspruch 4, wobei der Schritt des Bestimmens (12), ob eine Zelle trendfähig ist, Folgendes beinhaltet:

Vergleichen der Anzahl von Hauptverkehrsstunden-Verkehrsaufkommen in der Vielzahl von Hauptverkehrsstunden-Verkehrsaufkommen der Zelle, gemessen innerhalb der Trenderzeugungsperiode, mit dem Hauptverkehrsstunden- Verkehrsaufkommen- Schwellenwert, und wenn die Anzahl der Hauptverkehrsstunden-Verkehrsaufkommen der Zelle größer als der oder gleich dem Hauptverkehrsstunden-Verkehrsaufkommen-Schwellenwert ist, dann ist die Zelle trendfähig, und wenn die Anzahl der Hauptverkehrsstunden- Verkehrsaufkommen der Zelle kleiner als der Hauptverkehrsstunden-Verkehrsaufkommen-Schwellenwert ist, dann ist die Zelle nicht trendfähig.

6. Verfahren gemäß einem der vorhergehenden Ansprüche, wobei der Schritt des Bestimmens der ersten Vertrauenslinie (1) auf dem Vertrauensgraphen (5), die das höchste Vertrauensniveau repräsentiert, Folgendes beinhaltet:

Teilen (201) des Vertrauensgraphen (5) in eine Vielzahl von Bereichen, wobei die Vielzahl von Bereichen angeordnet ist, um zwei oder mehr Reihen von Bereichen bereitzustellen;
Zählen (202) der Gesamtzahl von Zellen, die innerhalb einer ersten Reihe der zwei oder mehr Reihen von Bereichen enthalten sind;
Zählen (203) der Anzahl von Zellen, die innerhalb jedes Bereichs der ersten Reihe enthalten sind;
Bestimmen (204) der Anzahl von Zellen, die innerhalb jedes Bereichs der ersten Reihe enthalten sind, als Prozentanteil der Gesamtzahl von Zellen, die innerhalb der ersten Reihe enthalten sind;
Identifizieren (206) des Bereichs, der einen Prozentanteil von Zellen mindestens gleich einem im Voraus bestimmten minimalen Prozentanteil aufweist und der die kleinste Standardabweichung in der ersten Reihe aufweist;
Wiederholen der obigen Schritte für mindestens eine zweite Reihe der zwei oder mehr Reihen von Bereichen;
Bestimmen (208) der Linie der besten Anpassung für die identifizierten Bereiche.

7. Verfahren gemäß einem der vorhergehenden Ansprüche, wobei der Schritt des Bestimmens (21) der zweiten Vertrauenslinie (2) auf dem Vertrauensgraphen (5), die das niedrigste annehmbare Vertrauensniveau repräsentiert, Folgendes beinhaltet:

Auswählen einer Standardabweichungsverschiebung;
Bilden der zweiten Vertrauenslinie (2) als eine Linie, die zu der ersten Vertrauenslinie (1) parallel und davon um die ausgewählte Standardabweichungsverschiebung verschoben ist.

8. Verfahren gemäß einem der Ansprüche 1 bis 6, wobei der Schritt des Bestimmens (21) der zweiten Vertrauenslinie (2) auf dem Vertrauensgraphen (5), die das niedrigste annehmbare Vertrauensniveau repräsentiert, Folgendes beinhaltet:

Bestimmen einer Gleichung, die die erste Vertrauenslinie (1) definiert;
Auswählen einer Standardabweichungsverschiebung;
Addieren der ausgewählten Standardabweichungsverschiebung zu der Gleichung der ersten Vertrauenslinie (1), um eine zweite Gleichung zu erhalten, und
Bestimmen, dass die zweite Gleichung die zweite Vertrauenslinie (2) definiert.

9. Verfahren gemäß einem der vorhergehenden Ansprüche, wobei der Schritt des Identifizierens (22) von Zellen, die zwischen die erste Vertrauenslinie (1) und die zweite Vertrauenslinie (2) fallen, als zuverlässige Kommunikationszellen (4) beinhaltet:

Auftragen der ersten und zweiten Vertrauenslinie (1, 2) auf dem Vertrauensgraphen (5), um eine Region zu definieren, die zuverlässige Kommunikationszellen (4) einschließt.

10. Verfahren gemäß einem der vorhergehenden Ansprüche, wobei der Schritt des Bestimmens der trendfähigen Zellen (3) beinhaltet, Zellen zu markieren (14), in denen eine unnormale Spitze oder ein unnormaler Tiefpunkt in den Hauptverkehrsstunden-Verkehrsaufkommen vorgekommen ist.

11. Ein Verfahren zum Erzeugen eines Verkehrstrends eines annehmbaren Vertrauensniveaus für eine Kommunikationszelle, das die folgenden Schritte beinhaltet:

Bestimmen (426) unter Verwendung des Verfahrens gemäß Anspruch 1, ob die Zelle eine zuverlässige Kommunikationszelle ist, und wenn dies der Fall ist,
Bestimmen (432), dass die Linie der besten Anpassung eines Graphen einer Vielzahl von innerhalb einer Trenderzeugungsperiode gemessenen Hauptverkehrsstunden-Verkehrsaufkommen gegen die Zeit in der Trenderzeugungsperiode für die Zelle den Verkehrstrend des annehmbaren Vertrauensniveaus der Zelle bereitstellt.

12. Verfahren gemäß Anspruch 11, wobei das Verfahren ferner die folgenden Schritte beinhaltet:

Auswählen (402) einer Vorhersageperiode, über die der Verkehrstrend der Zelle auszudehnen ist, und
Extrapolieren (428) der Linie der besten Anpassung des Graphen der Vielzahl von Hauptverkehrsstunden-Verkehrsaufkommen gegen die Zeit der Zelle bis zu einem Punkt, der das Ende der Vorhersageperiode repräsentiert.

13. Verfahren gemäß Anspruch 11 oder 12, wobei das Verfahren ferner den Schritt des Addierens (430) einer oder mehrerer Spannen zu der extrapolierten Linie der besten Anpassung beinhaltet, um ein prozentuales Wachstum über eine erste Zeitperiode zu berücksichtigen.

14. Verfahren gemäß Anspruch 13, wobei das prozentuale Wachstum über eine erste Zeitperiode durch ein Verfahren bestimmt wird, das die folgenden Schritte beinhaltet
Lesen eines Anfangswerts der Linie der besten Anpassung;
Lesen eines Endwerts der Linie der besten Anpassung;
Bestimmen der Differenz zwischen dem Anfangswert und dem Endwert;
Lesen der Zeitperiode zwischen dem Anfangswert und dem Endwert zum
Bereitstellen einer zweiten Zeitperiode, die eine Unterteilung der ersten Zeitperiode ist;
Berechnen der äquivalenten Differenz zwischen dem Startwert und dem Endwert über die erste Zeitperiode.

15. Verfahren gemäß Anspruch 13 oder 14, wobei eine Spanne zur Berücksichtigung von prozentualem Wachstum über eine erste Zeitperiode durch ein Verfahren bestimmt wird, das die folgenden Schritte beinhaltet:

Auswählen eines ersten Spannenwerts und eines zweiten Spannenwerts;
Auswählen eines Schwellenwerts des prozentualen Wachstums;
Vergleichen des prozentualen Wachstums über die erste Zeitperiode mit dem Schwellenwert des prozentualen Wachstums, wobei, wenn das prozentuale Wachstum über die erste Zeitperiode über dem Schwellenwert des prozentualen Wachstums liegt, der erste Spannenwert die Spanne zur Berücksichtigung des prozentualen Wachstums über die erste Zeitperiode ist, und wenn das prozentuale Wachstum über die erste Zeitperiode unter dem Schwellenwert des prozentualen Wachstums liegt, der zweite Spannenwert die Spanne zur Berücksichtigung des prozentualen Wachstums über die erste Zeitperiode ist.

## Revendications

1. Une méthode pour identifier des cellules de communication fiables (4) pour lesquelles une tendance de trafic présentant un niveau de confiance acceptable peut être générée, comprenant les étapes consistant à :

choisir une période de génération de tendance ;
déterminer (12) quelles cellules parmi une pluralité de cellules sont à tendance déterminable sur la base du nombre de niveaux de trafic à l'heure chargée mesurés au sein de la période de génération de tendance ; et
identifier les cellules de communication fiables (4) parmi les cellules à tendance déterminable (3), dans laquelle le fait d'identifier les cellules de communication fiables (4) comprend :

pour chaque cellule à tendance déterminable (3), obtenir (13) une pluralité de niveaux de trafic à l'heure chargée mesurés au sein de la période de génération de tendance, générer (15) un graphe de la pluralité de niveaux de trafic à l'heure chargée par rapport au temps de la période de génération de tendance, déterminer (16) une droite de meilleur ajustement pour le graphe de la pluralité de niveaux de trafic à l'heure chargée par rapport au temps,
déterminer (17) l'écart type de la pluralité de niveaux de trafic à l'heure chargée à partir de la droite de meilleur ajustement, et déterminer (18) la moyenne de la pluralité de niveaux de trafic à l'heure chargée ; et
pour toutes les cellules à tendance déterminable (3), générer (19) un graphe de confiance (5) de la moyenne de la pluralité de niveaux de trafic à l'heure chargée par rapport à l'écart type de la pluralité de niveaux de trafic à l'heure chargée, déterminer (20) une première droite de confiance (1) sur le graphe de confiance (5), laquelle représente un niveau de confiance le plus élevé, déterminer (21) une deuxième droite de confiance (2) sur le graphe de confiance, laquelle représente un niveau de confiance acceptable le plus bas sélectionné par un opérateur, et identifier (22) des cellules qui tombent entre la première droite de confiance (1) et la deuxième droite de confiance (2) comme étant les cellules de communication fiables (4).

2. La méthode selon la revendication 1, dans laquelle les niveaux de trafic à l'heure chargée sont ou des niveaux de trafic à l'heure chargée hebdomadaire, ou des niveaux de trafic à l'heure chargée journalière, ou des niveaux de trafic à l'heure chargée mensuelle, ou des niveaux de trafic à l'heure chargée annuelle.

3. La méthode selon n'importe quelle revendication précédente, dans laquelle l'étape consistant à déterminer (12) si une cellule est à tendance déterminable comprend, comparer le nombre de niveaux de trafic à l'heure chargée de la cellule mesurés au sein de la période de génération de tendance avec un seuil de niveaux de trafic à l'heure chargée.

4. La méthode selon la revendication 3, dans laquelle le seuil de niveaux de trafic à l'heure chargée est deux niveaux de trafic à l'heure chargée ou plus.

5. La méthode selon la revendication 3 ou la revendication 4, dans laquelle l'étape consistant à déterminer (12) si une cellule est à tendance déterminable comprend, comparer le nombre de niveaux de trafic à l'heure chargée dans la pluralité de niveaux de trafic à l'heure chargée de la cellule mesurés au sein de la période de génération de tendance avec le seuil de niveaux de trafic à l'heure chargée, et si le nombre de niveaux de trafic à l'heure chargée de la cellule est supérieur ou égal au seuil de niveaux de trafic à l'heure chargée, alors la cellule est à tendance déterminable, et si le nombre de niveaux de trafic à l'heure chargée de la cellule est inférieur au seuil de niveaux de trafic à l'heure chargée, alors la cellule n'est pas à tendance déterminable.

6. La méthode selon n'importe quelle revendication précédente, dans laquelle l'étape consistant à déterminer la première droite de confiance (1) sur le graphe de confiance (5), laquelle représente le niveau de confiance le plus élevé, comprend, diviser (201) le graphe de confiance (5) en une pluralité de cases, dans laquelle la pluralité de cases sont agencées pour fournir deux rangées ou plus de cases ; compter (202) le nombre total de cellules contenues dans une première rangée des deux rangées ou plus de cases ;
compter (203) le nombre de cellules contenues dans chaque case de la première rangée ;
déterminer (204) le nombre de cellules contenues dans chaque case de la première rangée en tant que pourcentage du nombre total de cellules contenues dans la première rangée ;
identifier (206) la case qui a un pourcentage de cellules au moins égal à un pourcentage minimum prédéterminé et qui a le plus petit écart type dans la première rangée ;
répéter les étapes ci-dessus pour au moins une deuxième rangée des deux rangées ou plus de cases ;
déterminer (208) la droite de meilleur ajustement pour les cases identifiées.

7. La méthode selon n'importe quelle revendication précédente, dans laquelle l'étape consistant à déterminer (21) la deuxième droite de confiance (2) sur le graphe de confiance (5), laquelle représente le niveau de confiance acceptable le plus bas, comprend,
choisir un décalage d'écart type;

former la deuxième droite de confiance (2) sous forme de droite parallèle à la première droite de confiance (1) et décalée par rapport à celle-ci du décalage d'écart type choisi.

8. La méthode selon n'importe laquelle des revendications 1 à 6, dans laquelle l'étape consistant à déterminer (21) la deuxième droite de confiance (2) sur le graphe de confiance (5), laquelle représente le niveau de confiance acceptable le plus bas, comprend,

déterminer une équation qui définit la première droite de confiance (1);

choisir un décalage d'écart type ;

ajouter le décalage d'écart type choisi à l'équation de la première droite de confiance (1) pour obtenir une deuxième équation, et

déterminer que la deuxième équation définit la deuxième droite de confiance (2).

9. La méthode selon n'importe quelle revendication précédente, dans laquelle l'étape consistant à identifier (22) des cellules qui tombent entre la première droite de confiance (1) et la deuxième droite de confiance (2) comme étant des cellules de communication fiables (4) comprend,

tracer les première et deuxième droites de confiance (1, 2) sur le graphe de confiance (5) pour définir une région qui enferme des cellules de communication fiables (4).

10. La méthode selon n'importe quelle revendication précédente, dans laquelle l'étape consistant à déterminer les cellules à tendance déterminable (3) comprend le fait de baliser (14) des cellules dans lesquelles il s'est produit un pic ou un creux anormal dans les niveaux de trafic à l'heure chargée.

11. Une méthode pour générer une tendance de trafic d'un niveau de confiance acceptable pour une cellule de communication comprenant les étapes consistant à, déterminer (426) si la cellule est une cellule de communication fiable à l'aide de la méthode selon la revendication 1, et si c'est le cas,

déterminer (432) que la droite de meilleur ajustement d'un graphe d'une pluralité de niveaux de trafic à l'heure chargée mesurés au sein d'une période de génération de tendance par rapport au temps dans la période de génération de tendance pour la cellule fournit la tendance de trafic du niveau de confiance acceptable de la cellule.

12. La méthode selon la revendication 11 dans laquelle la méthode comprend de plus les étapes consistant à,

choisir (402) une période de prédiction sur laquelle la tendance de trafic de la cellule doit s'étendre, et extrapoler (428) la droite de meilleur ajustement du graphe de la pluralité de niveaux de trafic à l'heure chargée par rapport au temps de la cellule jusqu'à un point qui représente la fin de la période de prédiction.

13. La méthode selon la revendication 11 ou la revendication 12, dans laquelle la méthode comprend de plus l'étape consistant à ajouter (430) une ou plusieurs marges à la droite de meilleur ajustement extrapolée pour justifier d'un pourcentage d'augmentation sur une première période de temps.

14. La méthode selon la revendication 13, dans laquelle le pourcentage d'augmentation sur une première période de temps est déterminé par une méthode comprenant les étapes consistant à,

lire une valeur de départ de la droite de meilleur ajustement;

lire une valeur finale de la droite de meilleur ajustement ;

déterminer la différence entre la valeur de départ et la valeur finale;

lire la période de temps entre la valeur de départ et la valeur finale, pour fournir une deuxième période de temps qui est une sous-division de la première période de temps ;

calculer la différence équivalente entre la valeur de départ et la valeur finale sur la première période de temps.

15. La méthode selon la revendication 13 ou la revendication 14, dans laquelle une marge pour justifier du pourcentage d'augmentation sur une première période de temps est déterminée par une méthode comprenant les étapes consistant à, choisir une première valeur de marge et une deuxième valeur de marge;

choisir un pourcentage d'augmentation seuil ;

comparer le pourcentage d'augmentation sur la première période de temps au pourcentage d'augmentation seuil, dans laquelle si le pourcentage d'augmentation sur la première période de temps est en dessus du pourcentage d'augmentation seuil, la première valeur de marge est la marge pour justifier d'un pourcentage d'augmentation sur la première période de temps, et si le pourcentage d'augmentation sur la première période de temps est en dessous du pourcentage d'augmentation seuil, la deuxième valeur de marge est la marge pour justifier d'un pourcentage d'augmentation sur la première période de temps.

Choosing a trend generation period over which weekly busy hour traffic data is to be obtained. —(11)

Choosing a threshold busy-hour traffic level. ——(23)

Determined which cells of a plurality of cells within the network are trendable. —(12)

Flagging cells in which special events occurred. (14)

Obtaining a plurality of weekly busy-hour traffic levels for each of the trendable cells, over the trend generation period. —(13)

Generating a graph of the weekly busy-hour traffic levels against time over the trend generation period. ——(15)

Determining a line of best fit for each graph of weekly busy-hour traffic levels against time. —(16)

Determining the standard deviation of the weekly busy-hour traffic levels of each of the trendable cells, from the line of best fit. ——(17)

Determining the average of the weekly busy-hour traffic levels for each of the trendable cells. —(18)

Generating a confidence graph of the average weekly busy-hour traffic levels of each of the trendable cells, against the standard deviation of the weekly busy-hour traffic levels of each of the trendable cells. —(19)

Determining a first confidence line on the confidence graph, which represents the highest confidence level. —(20)

Determining a second confidence line on the confidence graph, which represents the lowest acceptable confidence level. (21)

Identifying cells that fall between the first confidence line and the second confidence line as the reliable communication cells. —(22)

*Figure 1*

Dividing the confidence graph into N number of bins Δt wide and M number of bins Δs wide. ─(201)

Counting the total number of cells contained within each row for each of the N rows of bins. ─(202)

Counting the number of cells contained within each bin of a row, for each of the N rows of bins. ─(203)

Determining the number of cells contained within each bin of a row as a percentage of the total number of cells contained within the row. ─(204)

Choosing a minimum percentage value. ─(205)

Identifying the bin, in each of the N rows of bins, which is located at the lowest standard deviation and which has a number of cells whose percentage of the total number of cells in the row is at least equal to the chosen minimum percentage value. ─(206)

Discarding the cells other then those identified so that only one cell remains on each row. ─(207)

Determining a line of best fit for the cells that remain. ─(208)

*Figure 2*

Figure 3

16

Choosing a prediction period. —(402)

Identifying the reliable communication cells. —(426)

Identifying the line of best fit of each graph of each graph of busy-hour traffic against time for each of the reliable communication sells as providing a traffic trend of an acceptable confidence level over the period of the prediction period for which traffic levels are available with the reliable cells —(427)

Extrapolating the line of best fit of each of the plots of the weekly busy-hour traffic against time of the reliable communication cells, to a point which represents the end of the chosen prediction period. —(428)

Add Margins —(430)

A traffic trend which includes a trend for future traffic for each of the reliable communication cells, each traffic trend having an acceptable confidence level. —(432)

*Figure 4*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6810356 B